# EUROPEAN PATENT SPECIFICATION

(11) **EP 1 253 052 B1**
(45) Date of publication and mention of the grant of the patent: **04.08.2004**
(21) Application number: 02252781.6
(22) Date of filing: 19.04.2002
(51) Int. Cl.: B60R 22/12

(54) **Safety belt webbing with tongue stop**
Sicherheitsgurt mit Steckzungenstopper
Ceinture de sécurité avec un arrêt pour le pêne de verrouillage

(30) Priority: 23.04.2001 GB 0109933
(43) Date of publication of application: 30.10.2002
(73) Proprietor: KEY SAFETY SYSTEMS, INC., Sterling Heights, Michigan 48314 (US)
(72) Inventor: Bell, John, Carlisle, Cumbria CA2 6QU (GB); Park, Andrew, Wigton, Cumbria CA7 9PF (GB); Palliser, Martyn, Carlisle, Cumbria CA5 7NF (GB)
(74) Representative: Freeman, Jacqueline Carol

(56) References cited:
- WO-A-01/60191
- US-A- 4 223 917
- US-A- 5 173 997

## Description

The present invention relates to belt webbing for a vehicle safety restraint.

A traditional three point seat belt restraint has a length of belt webbing connected to the vehicle, at one end to the floor, and at the other end to a retractor. The length of webbing passes over a loop fastened to a side pillar of the vehicle and through an aperture in a tongue member. The position of the tongue member is adjustable on the webbing since the webbing slides freely through the aperture. The tongue member is fastenable to a buckle fixed to the vehicle on an opposite side of the vehicle occupant so that, when buckled, the belt passes both over the lap of the occupant and diagonally across the torso.

When unbuckled spare belt webbing is automatically wound into the retractor and adopts a length corresponding to the distance between the retractor and the pillar loop, and the tongue member tends to slide down the webbing. One solution to this is proposed in WO 01 60191A (BREED AUTOMOTIVE TECH), having been published after the priority date of this application, which aims to resist the sliding of a tongue on webbing by providing a protrusion on the inside of the tongue aperture which receives the webbing. To ensure that the tongue member hangs in a position accessible to an occupant it is known to put a tongue stop in the form of a button on the webbing at a suitable location to prevent the tongue member falling all the way to the floor.

US-A-5173997 (TSUCHIKAWA MASANAGA ET AL) shows the features of the preamble of claim 1 and discloses a disc shaped tongue stop which is attached to the webbing by needle formations.

However this tongue stop can cause problems when the seat belt is used to restrain a child seat. European regulations dictate that there must be no loose webbing in either the lap or the diagonal torso portions. The tongue stop could leave loose webbing in the lap portion when the belt is fastened around a child seat because the tongue stop effectively prevents all the webbing in the lap portion from being pulled in. If the tongue stop is put in a position which avoids loose webbing in this situation then, when the belt is unlatched, the tongue member hangs too low to be convenient for the seat occupant.

According to the present invention there is provided vehicle safety restraint seat belt webbing comprising a tongue stop which is resiliently deformable, comprising two laterally spaced raised portions.

The stop may be resiliently deformable in the direction of its width (laterally) or in its thickness and may be formed of rubber or another elastically deformable material which returns to its original shape when the deforming force is removed. The raised portions or bumps may be squashable, or may move toward each other in deformation.

For a better understanding of the present invention, and to show how the same may be carried into effect, reference will now be made, by way of example, to the accompanying drawings, in which:
Figure 1 is a schematic view of a section of seat belt webbing according to the present invention;
Figure 2 is a schematic close up view of a section of the seat belt webbing of figure 1 in one position relative to a tongue member;
Figure 3 is a second position relative to the tongue member.

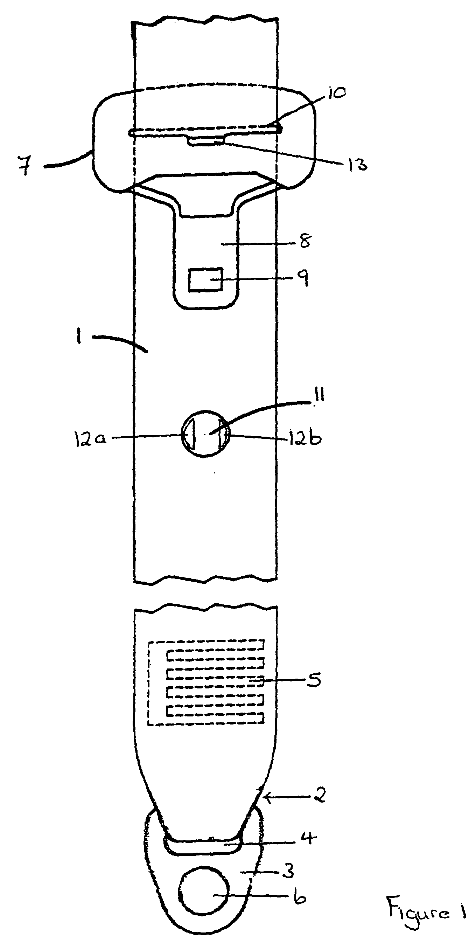

Figure 1 shows a section of seat belt webbing 1 attached at one end 2 to a load bearing fixing ring 3 by being looped through a slot 4 on the fixing ring 3 and stitched through two layers as shown at 5. The fixing ring 3 is fastened to the flour of a vehicle by a bolt (not shown) passing through a hole 6.

A tongue member 7 comprises a narrow latching tongue 8 with a square aperture 9, and a slot 10 having a central wider part forming a channel 13. The narrow tongue 8 fits into a buckle (not shown) to fasten the belt 1 around an occupant in a vehicle. A latching bolt in the buckle passes through the square aperture 9 to secure the belt.

The tongue member 7 is free to slide on the webbing 1 passing through the slot 10 but its movement is limited by a tongue stop 11 which prevents the tongue member 7 falling down the webbing 1 into an inaccessible position in the vehicle when the tongue is unlatched. The tongue stop 11 is in the form of a button embedded in or embossed on the webbing 1 at a suitable location, to effectively thicken the webbing 1 at that location, to a level which is thicker in normal use than the slot 10 and is wider than the channel 13.

This tongue stop 11 is however resiliently flexible so that the slot 10 in the tongue member can be forced over it if a child seat is being fastened.

The illustrated stop 11 is flexible in the direction of its width (laterally) but flexibility in the thickness of the stop would also work well. It has two semicircular raised portions 12a and 12b but the skilled man will understand that many possible configurations can be envisaged to achieve the correct level of resilient deformability. The stop must be deformable easily enough for it to be deformed by a normal person since it is required to be deformed by an end user of the vehicle in installing a child seat which is likely to be an everyday situation. On the other hand it should not be too easily deformed since it is not desired that the tongue member slip over the stop unintentionally, for example if only a slight force were needed then the tongue member would fall to an inconvenient position to be easily accessed by the user.

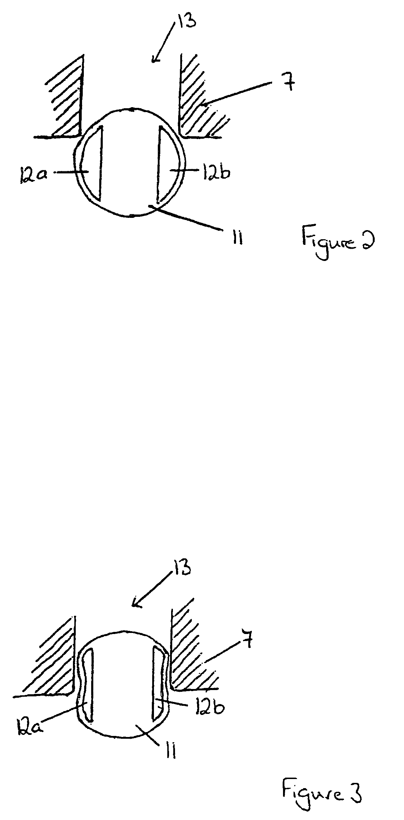

Figures 2 and 3 illustrate the operation of the flexible tongue stop 11 in more detail.

The stop 11 comprises a button of rubber or another resiliently deformable material and has a generally circular shape with two semicircular raised portions or bumps 12a and 12b in horizontally opposed positions.

In Figure 2 the stowed position of the tongue is shown and the slot 10 is in contact with the outer periphery of the stop 11. In figure 3, force is applied and the bumps 12a and 12b are deformed in directions towards each other by the side walls of the channel 13 adjacent the slot 10. The stop 11 is thus forced through the slot 10 and the tongue member is no longer constrained by it so no loose webbing will arise in securing a child seat. After the tongue member has passed the stop 11 the bumps 12a and 12b return to their original positions so that the stop is effective to support the tongue member when the seat belt is to be used for an adult occupant.

## Claims

1. Vehicle safety restraint seat belt webbing (1) comprising a tongue stop (11) **characterised by** the tongue stop (11) being resiliently deformable and comprising two laterally spaced raised portions (12a, 12b).

2. Vehicle safety restraint seat belt webbing according to claim 1 wherein the tongue stop is deformable laterally.

3. Vehicle safety restraint seat belt webbing (1) according to claim 1 or 2 wherein the raised portions (12a, 12b) are displaced toward each other by a predetermined force.

4. Vehicle safety restraint seat belt webbing (1) according to any one of the preceding claims wherein the tongue stop (11) is formed of rubber.

## Patentansprüche

1. Fahrzeugsicherheitsrückhaltegurtband (1), das einen Steckzungenstopper (11) aufweist, **dadurch gekennzeichnet, daß** der Steckzungenstopper (11) elastisch verformbar ist und zwei seitlich beabstandete erhabene Abschnitte (12a, 12b) aufweist.

2. Fahrzeugsicherheitsrückhaltegurtband nach Anspruch 1, bei dem der Steckzungenstopper seitlich verformbar ist.

3. Fahrzeugsicherheitsrückhaltegurtband (1) nach Anspruch 1 oder 2, bei dem die erhabenen Abschnitte (12a, 12b) in Richtung zueinander durch eine vorgegebene Kraft verschoben werden.

4. Fahrzeugsicherheitsrückhaltegurtband (1) nach einem der vorhergehenden Ansprüche, bei dem der Steckzungenstopper (11) aus Gummi gebildet wird.

## Revendications

1. Sangle de ceinture de sécurité pour un véhicule (1) comprenant un arrêt de la languette (11), **caractérisée en ce que** l'arrêt de la languette (11) est déformable élastiquement et comprend deux parties surélevées à espacement latéral (12a, 12b).

2. Sangle de ceinture de sécurité pour un véhicule selon la revendication 1, dans laquelle l'arrêt de la languette peut être déformé latéralement.

3. Sangle de ceinture de sécurité pour un véhicule (1) selon les revendications 1 ou 2, dans laquelle les parties surélevées (12a, 12b) sont déplacées l'une vers l'autre par une force prédéterminée.

4. Sangle de ceinture de sécurité pour un véhicule (1) selon l'une quelconque des revendications précédentes, dans laquelle l'arrêt de la languette (11) est composé de caoutchouc.
